# EUROPEAN PATENT APPLICATION

(11) **EP 4 366 017 A1**
(43) Date of publication of application: **08.05.2024**
(21) Application number: 22832905.8
(22) Date of filing: 20.06.2022
(51) Int. Cl.: H01M 10/052, H01M 4/66, H01M 10/0569, H01M 50/46, H01M 50/489

(54) **LITHIUM SECONDARY BATTERY**

(30) Priority: 30.06.2021 JP 2021109588
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP)
(74) Representative: Novagraaf International SA
(86) International application number: PCT/JP2022/024524
(87) International publication number: WO 2023/276757

(57) **Abstract**

Disclosed is a lithium secondary battery (10) including a positive electrode (11) containing a positive electrode active material capable of absorbing and releasing lithium ions, a negative electrode (12) including a negative electrode current collector, a separator (13) disposed between the positive electrode (11) and the negative electrode (12), and a nonaqueous electrolyte having lithium ion conductivity. At the negative electrode, lithium metal deposits during charging, and the lithium metal dissolves during discharging. The negative electrode current collector includes an austenitic stainless steel.

## Description

### [Technical Field]

The present disclosure relates to a lithium secondary battery.

### [Background Art]

Nonaqueous electrolyte secondary batteries are used for ICT devices, such as personal computers and smart phones, cars, power storage systems, and other applications. For the nonaqueous electrolyte secondary batteries used for such applications, further improvement in capacity has been required. One known example of a high-capacity nonaqueous electrolyte secondary battery is a lithium ion battery. A higher capacity of the lithium ion battery can be achieved by using, as a negative electrode active material, for example, graphite in combination with an alloy active material, such as a silicon compound. However, the improvement in capacity of the lithium ion battery is approaching to the limit.

As a nonaqueous electrolyte secondary battery superior in capacity to the lithium ion battery, a lithium secondary battery (lithium metal secondary battery) is seen as promising. In the lithium secondary battery, lithium metal deposits at the negative electrode during charging, and the lithium metal dissolves in the nonaqueous electrolyte during discharging.

Patent Literature 1 discloses a nonaqueous electrolyte secondary battery including: a positive electrode having a positive electrode active material comprising a lithium-containing transition metal oxide; a negative electrode which has a negative electrode current collector and in which lithium metal deposits on the negative electrode current collector during charging; a separator disposed between the positive electrode and the negative electrode; and a nonaqueous electrolyte. The molar ratio of the total amount of lithium that the positive electrode and the negative electrode have to the amount of transition metal contained in the positive electrode is 1.1 or less. In a discharged state, a space layer is present between the negative electrode and the separator, and the positive electrode capacity α (mAh/cm²) per unit area of the positive electrode, and the average value X (µm) of the thickness of the space layer satisfy 0.05 ≤ α / X ≤ 0.2.

### [Citation List]

### [Patent Literature]

Patent Literature 1: International Publication WO2019/087709

### [Summary of Invention]

### [Technical Problem]

A rupture occurs in the negative electrode current collector during charging and discharging, leading to deterioration of cycle characteristics.

### [Solution to Problem]

One aspect of the present disclosure relates to a lithium secondary battery, including: a positive electrode containing a positive electrode active material capable of absorbing and releasing lithium ions; a negative electrode including a negative electrode current collector; a separator disposed between the positive electrode and the negative electrode; and a nonaqueous electrolyte having lithium ion conductivity, wherein at the negative electrode, lithium metal deposits during charging, and the lithium metal dissolves during discharging, and the negative electrode current collector includes an austenitic stainless steel.

### [Advantageous Effects of Invention]

According to the present disclosure, it is possible to suppress the deterioration of cycle characteristics of the lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal cross-sectional view of a lithium secondary battery according to an embodiment of the present disclosure.
[FIG. 2] An enlarged cross-sectional view of a region II in FIG. 1.
[FIG. 3] An enlarged cross-sectional view of a region III in FIG. 1.

### [Description of Embodiments]

Embodiments of the present disclosure relate to a lithium secondary battery (lithium metal secondary battery) in which lithium metal is used as a negative electrode active material. That is, a lithium secondary battery according to an embodiment of the present disclosure includes a positive electrode containing a positive electrode active material capable of absorbing and releasing lithium ions, a negative electrode including a negative electrode current collector, a separator disposed between the positive electrode and the negative electrode, and a nonaqueous electrolyte having lithium ion conductivity. At the negative electrode, lithium metal deposits during charging, and the lithium metal dissolves during discharging.

In a lithium secondary battery, 70% or more, for example, of the rated capacity develops through deposition and dissolution of lithium metal. The migration of electrons at the negative electrode during charging and during discharging is mainly due to the deposition and the dissolution of lithium metal at the negative electrode. Specifically, 70 to 100% (e.g., 80 to 100%, 90 to 100%) of the migration of electrons (in other words, electric current) at the negative electrode during charging and during discharging is due to the deposition and the dissolution of lithium metal. That is, the negative electrode of the lithium secondary battery according to the present disclosure differs from the negative electrode of a battery in which the migration of electrons at the negative electrode during charging and during discharging is mainly due to absorption and release of lithium ions by a negative electrode active material (graphite etc.). For example, the negative electrode of a lithium secondary battery according to the present disclosure may not necessarily contain a negative electrode active material (graphite etc.) that absorbs and releases lithium ions.

In a battery in which lithium metal deposits at the negative electrode during charging, the open circuit voltage (OCV) of the negative electrode at full charge is, for example, 70 mV or less versus lithium metal (dissolution/deposition potential of lithium). Being at full charge refers to a state where, when the rated capacity of the battery is denoted by C, the battery is charged until a state of charge (SOC) of, for example, 0.98 × C or more is reached. The open circuit voltage (OCV) of the negative electrode at full charge can be measured by disassembling the battery in a fully charged state under an argon atmosphere to take out the negative electrode, and assembling it into a cell for measurement, using lithium metal as a counter electrode. The nonaqueous electrolyte of the cell may be of the same composition as the electrolyte in the disassembled battery.

In a lithium secondary battery, during charging, due to the deposition of lithium metal at the negative electrode, the expansion amount of the negative electrode tends to increase. Here, the "expansion of the negative electrode" means that the sum of the volumes of the negative electrode and the deposited lithium metal increases. Especially when lithium metal deposits in a dendritic form, the expansion amount further increases. This tends to generate a stress in the negative electrode.

The present inventor has conducted extensive studies on the cause of the rupture occurrence in the negative electrode current collector during charging and discharging. As a result, it was newly found that the negative electrode current collector becomes brittle with repeated charging and discharging, and the embrittlement of the negative electrode current collector, together with the stress generated in the negative electrode, was the cause of the rupture occurrence in the negative electrode current collector. It was newly revealed from a SEM observation that, at the ruptured portion of the negative electrode current collector, there was observed almost no deformation of crystal grains in the ductile direction when the negative electrode current collector stretched and broke, and almost no tapering deformation of the negative electrode current collector, showing a state of brittle fracture.

Furthermore, it was suggested that the embrittlement of the negative electrode current collector is affected by some substance generated at the negative electrode. In light of this, the present inventor has further conducted intensive studies, with focuses on the crystal structures of stainless steel (ferrite, austenite, and martensite having different slip planes and other properties), and newly found that austenite has a great effect in suppressing the embrittlement of the negative electrode current collector.

In a lithium secondary battery according to the present disclosure, the negative electrode current collector includes an austenitic stainless steel. In this case, the embrittlement of the negative electrode current collector is suppressed, and, the negative electrode current collector has appropriate strength and flexibility, and a negative electrode current collector having excellent resistance to the stress generated in the negative electrode can be obtained. As a result, the rupture occurrence in the negative electrode current collector during charging and discharging and its accompanying deterioration of cycle characteristics are suppressed.

The aforementioned "austenitic stainless steel" means a stainless steel having an austenite percentage of 50% or more. The austenite percentage means the proportion (mass ratio) of the austenite phase in the stainless steel. When the contents of the austenite phase, the ferrite phase, and the martensite phase in the stainless steel are represented by x, y, and z, respectively, the austenite percentage is calculated as {x / (x + y + z)} × 100. The austenite structure has a face-centered cubic lattice structure (FCC structure), and the ferrite structure and the martensitic structure have a body-centered cubic lattice structure (BCC structure).

The austenite percentage may be 70% or more, may be 90% or more, and may be 100%.

The austenite percentage can be determined by the following method.

A sample (e.g., size: 25 mm square) of the negative electrode current collector (stainless steel foil) is prepared, and X-ray diffraction (XRD) measurement employing a two-dimensional detection function is performed on the sample, to obtain an XRD pattern (vertical axis: X-ray diffraction intensity, horizontal axis: diffraction angle 2θ). The size of the measurement area (microscopic region) is, for example, 15 mm square.

Desirable XRD measurement conditions are shown below.

### <Analysis apparatus>

### Two-dimensional microscopic-region X-ray diffractometer (RINT-RAPID II, available from Rigaku Co., Ltd.)

### <Analysis conditions>

Tube: Co
Monochromatization: a monochromator is used (CoKα)
Tube output: 40 kV - 30 mA
Detector: Imaging plate (2D)

### (Reflection method)

Collimator: φ300 µm
ω angle: 25° to 35° (2°/sec)
φ angle: 360° rotation (1°/sec)
Measurement time (exposure): 30 minutes

The obtained XRD pattern is fitted by the least squares method utilizing a standard database, and next, quantitative analysis is performed by Rietveld analysis. The XRD pattern can have a diffraction peak corresponding to at least one of the austenite phase, the ferrite phase, and the martensitic phase. The analysis can be performed using a software accessory to the analysis apparatus. Through this analysis, the proportion (mass ratio) of the austenite phase to the total of the austenite phase, the ferrite phase, and the martensite phase is determined, as the austenite percentage. Several measurement areas are randomly selected in the sample, the austenite percentage in each measurement area is determined, to calculate an average value thereof.

The negative electrode current collector preferably has a breaking strength of 850 MPa or less and has a breaking elongation of 3% or more. In this case, it is easy to obtain a negative electrode current collector having favorable strength and flexibility and being excellent in resistance to the stress generated in the negative electrode. For example, the breaking strength and the breaking elongation in the above ranges may be obtained by heat treating an austenitic stainless steel foil. In general, as a result of heat treating, the crystal grain size tends to increase due to recrystallization, the strength tends to decrease, and the breaking elongation tends to improve.

The breaking strength of the negative electrode current collector may be 700 MPa or less, and may be 650 MPa or less. In view of improving the reliability in battery manufacturing, the breaking strength of the negative electrode current collector may be 400 MPa or more. With regard to the range of the breaking strength, the above upper and lower limits can be combined in any combination.

The breaking elongation of the negative electrode current collector may be 5% or more, and may be 10% or more. In view of improving the reliability in battery manufacturing, the breaking elongation of the negative electrode current collector may be 60% or less. With regard to the range of the breaking elongation, the above upper and lower limits can be combined in any combination.

The above breaking strength (tensile strength) and breaking elongation of the negative electrode current collector are determined in accordance with JIS Z 2241 (method of tensile test for metallic materials). However, since the negative electrode current collector has low strength and is a thin foil, skilled techniques are required for the measurement of the breaking elongation, and it is desirable to have the measurement done by an institution with a proven track record.

In view of improving the cycle characteristics, the ratio Y/X of the thickness Y of the separator to the thickness X of the negative electrode current collector may be 2.5 or more, may be 3 or more, and may be 4 or more. In terms of the battery capacity, the Y/X is, for example, 5 or less. With regard to the range of the Y/X, the above upper and lower limits can be combined in any combination.

The thickness Y of the separator refers to a thickness of the separator before formed into an electrode group (before housing the electrode group in a battery case). When the separator is constituted by laminating a plurality of thin sheet (film)-like materials, the Y is the total value of the thicknesses of the plurality of materials. When the separator has a thickness that varies from place to place, the Y is the maximum value of the thickness. When the separator has a plurality of regions with different thicknesses, the region where the separator has the thickness Y (maximum value) has an area of, for example, 20% to 80% of the total area of the separator facing the negative electrode. The thickness X of the negative electrode current collector is, for example, 5 µm or more and 30 µm or less.

With respect to a negative electrode current collector including an austenitic stainless steel, when the Y/X satisfies 2.5 or more, the cycle characteristics are significantly improved. When the Y/X satisfies 2.5 or more (when the separator has a thickness of 2.5 times or more as large as the thickness of the negative electrode current collector), the separator as above serves as a buffer to the expansion of the negative electrode (swelling of dendrites) during charging, to relax the stress generated at the negative electrode (negative electrode current collector). The actions exerted by the austenitic stainless steel of suppressing the embrittlement of the negative electrode current collector and of improving the resistance to the stress generated in the negative electrode are synergized with the relaxation action exerted when the Y/X is 2.5 or more of relaxing the stress generated in the negative electrode current collector, to make remarkable the effect of improving the cycle characteristics. When the austenite percentage is less than 50%, due to an increased influence of the rupture occurrence in the negative electrode current collector, the effect exerted when Y/X is 2.5 or more of relaxing the stress generated in the negative electrode is hardly exhibited.

The thickness X of the negative electrode current collector can be determined by measuring the thickness at 10 randomly selected points of the negative electrode current collector using a scanning electron microscope (SEM), and calculating the average value thereof. The thickness Y of the separator can also be determined in the same manner. When the separator has a plurality of regions with different thicknesses, the thickness is measured at 10 randomly selected points in the region having the maximum thickness, and the average value thereof is calculated.

### (Negative electrode)

The negative electrode includes a negative electrode current collector. In a lithium secondary battery, lithium metal deposits on the surface of the negative electrode during charging. More specifically, through charging, lithium ions contained in the nonaqueous electrolyte receive electrons on the negative electrode current collector to become lithium metal, which deposits on the surface of the negative electrode current collector. The lithium metal deposited on the surface of the negative electrode current collector dissolves as lithium ions in the nonaqueous electrolyte through discharging. The lithium ions contained in the nonaqueous electrolyte may be either derived from a lithium salt added to the nonaqueous electrolyte or supplied from the positive electrode active material through charging, or both.

The negative electrode current collector is typically a foil (sheet) of an austenitic stainless steel. The austenitic stainless steel may contain, for example, C, Si, Mn, P, S, Ni, Cr, Mn, Mo, Cu, N, or the like, as a component other than Fe. The above stainless steel may be a low carbon type, an ultra-low carbon type, or a nitrogen-added type stainless steel, and may be a duplex stainless steel containing austenite.

Examples of the austenitic stainless steel include SUS301, SUS302, SUS303, SUS304, SUS305, SUS309, SUS310, SUS312, SUS315, SUS316L, SUS317, SUS321, SUS347, etc. Preferred among them are SUS304 and SUS316L.

Although measurable by XRD method, the austenite percentage can be estimated using the Schaeffler structure diagram showing the relationship between ferrite-stabilizing and austenite-stabilizing elements, and structures. The structure diagram shows structure proportions, with ferrite-stabilizing elements and austenite-stabilizing elements on both axes. The vertical axis of the structure diagram shows a Ni equivalent, and the horizontal axis shows a Cr equivalent. The Cr equivalent is a value obtained by converting the degree of ferrite stabilizing elements into the amount of chromium, and can be expressed by the equation: Cr equivalent = %Cr + %Mo + 1.5 × %Si + 0.5 × %Nb. The Ni equivalent is a value obtained by converting the degree of austenite stabilizing elements into the amount of nickel, and can be expressed by the equation: Ni equivalent = %Ni + 30 × %C + 0.5 × %Mn.

In accordance with JIS G 0321, the stainless steel can be analyzed for its components, and austenite-stabilizing elements (Ni, Mn, C, etc.) and ferrite-stabilizing elements (Cr, Mo, Si, Nb) can be quantitatively analyzed.

In view of compensating for the irreversible capacity of the positive electrode, a lithium metal sheet may be placed in advance on a surface of the negative electrode current collector before the initial charging. The lithium metal sheet is formed by, for example, attaching, electrodepositing or vapor depositing lithium metal on a surface of the negative electrode current collector. Alternatively, a negative electrode mixture layer may be formed on a surface of the negative electrode current collector. In this case, the negative electrode mixture layer is formed thin so that lithium metal can deposit at the negative electrode during charging. The negative electrode mixture layer is formed by applying a negative electrode mixture slurry containing a negative electrode active material, such as graphite, onto a surface of the negative electrode current collector. The thickness of the lithium metal sheet (or negative electrode mixture layer) is not particularly limited, and is, for example, 3 to 300 µm. The lithium metal sheet (negative electrode mixture layer) may be formed on the surface of one side of the negative electrode current collector, or may be formed on both sides of the negative electrode current collector.

The surface of the negative electrode current collector may be smooth. This allows for uniform deposition of lithium metal derived from the positive electrode on the negative electrode current collector, during charging. Being smooth means that the maximum height roughness Rz of the negative electrode current collector is 20 µm or less. The maximum height roughness Rz of the negative electrode current collector may be 10 µm or less. The maximum height roughness Rz is measured in accordance with JIS B 0601:2013.

### (Positive electrode)

The positive electrode includes, for example, a positive electrode current collector and a positive electrode mixture layer supported on the positive electrode current collector. The positive electrode mixture layer includes, for example, a positive electrode active material, a conductive material, and a binder. The positive electrode mixture layer may be formed on only one side or on both sides of the positive electrode current collector. The positive electrode is obtained by, for example, applying a positive electrode mixture slurry containing a positive electrode active material, a conductive material, and a binder, onto both sides of the positive electrode current collector, drying the applied films, followed by rolling.

The positive electrode active material is a material that absorbs and releases lithium ions. As the positive electrode active material, for example, a lithium-containing transition metal oxide, a transition metal fluoride, a polyanion, a fluorinated polyanion, a transition metal sulfide, and the like can be used. Preferred among them is a lithium-containing transition metal oxide, in terms of its low production cost and high average discharge voltage.

Examples of the transition metal element contained in the lithium-containing transition metal oxide include Sc, Ti, V, Cr, Mn, Fe, Co, Ni, Cu, Y, Zr, W, etc. The lithium-containing transition metal oxide may contain one kind of transition metal element, or may contain two or more kinds of transition metal elements. The transition metal element may be Co, Ni and/or Mn. The lithium-containing transition metal oxide can contain one or more kinds of typical elements, as necessary. Examples of the typical element include Mg, Al, Ca, Zn, Ga, Ge, Sn, Sb, Pb, Bi, etc. The typical element may be Al etc.

The conductive material is, for example, a carbon material. As the carbon material, carbon black, acetylene black, Ketjen black, carbon nanotubes, graphite, and the like can be used.

As the binder, for example, a fluorocarbon resin, a polyacrylonitrile, a polyimide resin, an acrylic resin, a polyolefin resin, a rubbery polymer, and the like can be used. Examples of the fluorocarbon resin include polytetrafluoroethylene, polyvinylidene fluoride, etc.

For the positive electrode current collector, a foil, a film, and the like are used. A carbon material may be applied onto a surface of the positive electrode current collector. The material of the positive electrode current collector may be, for example, a metal material including Al, Ti, Fe, and the like. The metal material may be Al, an Al alloy, Ti, a Ti alloy, an Fe alloy, and the like. The Fe alloy may be stainless steel (SUS). The thickness of the positive electrode current collector is, without particular limitation, for example, 5 µm or more and 30 µm or less.

### (Separator)

For the separator, a porous sheet having ion permeability and electrically insulating properties is used. As the porous sheet, for example, a microporous film, a woven fabric, non-woven fabric, and the like can be used. The material of the separator is not particularly limited, but may be a polymer material. The polymer material is exemplified by an olefin resin, a polyamide resin, a cellulose, and the like. Examples of the olefin resin include polyethylene, polypropylene, a copolymer of ethylene and propylene, etc. The separator may contain an additive, as necessary. Examples of the additive include an inorganic filler etc. The separator may be constituted of a plurality of layers differing in shape and/or composition.

### (Nonaqueous electrolyte)

The nonaqueous electrolyte having lithium ion conductivity contains, for example, a nonaqueous solvent, and a lithium salt dissolved in the nonaqueous solvent. The nonaqueous electrolyte may be in the form of liquid, and may be in the form of gel. The nonaqueous electrolyte in the form of liquid is prepared by dissolving a lithium salt in a nonaqueous solvent. When the lithium salt is dissolved in a nonaqueous solvent, lithium ions and anions are produced.

The nonaqueous electrolyte in the form of gel contains a lithium salt and a matrix polymer, or contains a lithium salt, a nonaqueous solvent, and a matrix polymer. As the matrix polymer, for example, a polymer material that is gelled by absorbing a nonaqueous solvent is used. Examples of the polymer material include a fluorocarbon resin, an acrylic resin, a polyether resin, etc.

The lithium salt or anion may be any known one utilized for a nonaqueous electrolyte in a lithium secondary battery. Specific examples thereof include BF₄⁻, ClO₄⁻, PF₆⁻, CF₃SO₃⁻, CF₃CO₂⁻, imide anions, an oxalate complex anion, etc. Examples of the imide anions include N(SO₂CF₃)₂⁻, N(CₘF₂ₘ₊₁SO₂)ₓ(CₙF₂ₙ₊₁SO₂)_{y}⁻ (m and n are each independently an integer of 0 or 1 or more, and x and y are each independently 0, 1 or 2 and satisfy x + y = 2), etc. The oxalate complex anion may contain boron and/or phosphorus. Examples of the oxalate complex anion include bis(oxalate)borate anion, BF₂(C₂O₄)⁻, PF₄(C₂O₄)⁻, PF₂(C₂O₄)₂⁻, etc. The nonaqueous electrolyte may include one of these anions singly, or two or more kinds thereof.

In view of suppressing the deposition of lithium metal in a dendritic form, the nonaqueous electrolyte preferably includes at least an oxalate complex anion. The oxalate complex anion interacts with lithium, allowing for uniform deposition of lithium metal in the form of fine particles. Therefore, local deposition of lithium metal can be easily suppressed. The oxalate complex anion may be combined with another anion. The other anion may be, for example, PF₆⁻ and/or imide anions.

As the nonaqueous solvent, ester compounds, ether compounds, compounds, amide compounds, and the like can be used. These compounds include a halogen-substituted derivative and the like. The halogen-substituted derivative is exemplified by a fluoride and the like. The nonaqueous electrolyte may contain these nonaqueous solvents singly, or in combination of two or more kinds.

In particular, in view of suppressing the embrittlement of the negative electrode current collector, the nonaqueous solvent may contain at least one ether compound as a major component. The major component as used herein means the content of the at least one ether compound in the nonaqueous solvent being 50 mass% or more, which may be 80 mass% or more. The content of the at least one ether compound in the nonaqueous solvent may be 95 mass% or less, and may be 100 mass% or less. With regard to the range of the content of the at least one ether compound in the nonaqueous solvent, the above upper and lower limits can be combined in any combination.

The ether compounds are excellent in stability (especially in reduction resistance), serve to suppress the formation of decomposed products on the negative electrode current collector surface, and presumably have little influence on the negative electrode current collector. With respect to the negative electrode current collector including an austenitic stainless steel, when a nonaqueous electrolyte containing at least one ether compound as a major component is used, the cycle characteristics improvement effect resulted from suppressing the embrittlement of the negative electrode current collector can be remarkably obtained. When the austenite percentage is less than 50%, due to an increased influence of the rupture occurrence in the negative electrode current collector, the effect by the ether compound is hardly exhibited.

As the ether compound, a cyclic ether and a chain ether are exemplified. Examples of the cyclic ether include 1,3-dioxolane, 4-methyl-1,3-dioxolane, tetrahydrofuran, 2-methyltetrahydrofuran, etc. Examples of the chain ether include 1,2-dimethoxyethane, diethyl ether, ethyl vinyl ether, methylphenyl ether, benzylethyl ether, diphenyl ether, dibenzyl ether, 1,2-diethoxyethane, diethylene glycol dimethyl ether, 1,1,2,2-tetrafluoroethyl-2,2,2-trifluoroethyl ether, 1,1,2,2-tetrafluoroethyl-2,2,3,3-tetrafluoropropyl ether, etc. In view of suppressing the embrittlement of the negative electrode current collector, in particular, 1,2-dimethoxyethane and 1,1,2,2-tetrafluoroethyl-2,2,2-trifluoroethyl ether are preferred.

As the ester compound, for example, a carbonic acid ester, a carboxylic acid ester, and the like are exemplified. Examples of a cyclic carbonic acid ester include ethylene carbonate, propylene carbonate, etc. Examples of a chain carbonic acid ester include dimethyl carbonate (DMC), ethyl methyl carbonate (EMC), diethyl carbonate, etc. Examples of a cyclic carboxylic acid ester include γ-butyrolactone, γ-valerolactone, etc. Examples of a chain carboxylic acid ester include ethyl acetate, methyl propionate, methyl fluoropropionate, etc.

The concentration of the lithium salt in the nonaqueous electrolyte is, for example, 0.5 mol/L or more and 3.5 mol/L or less. The concentration of the anion in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a surface film on the negative electrode. When the surface film derived from the additive is formed on the negative electrode, the dendrite formation and growth can be easily suppressed. Examples of such an additive include vinylene carbonate, fluoroethylene carbonate (FEC), vinyl ethyl carbonate (VEC), etc.

### (Lithium secondary battery)

In the following, a configuration of a lithium secondary battery according to the present disclosure will be described with reference to the drawings, with a cylindrical battery having a wound electrode group taken as an example. However, that the present disclosure is not limited to the following configuration.

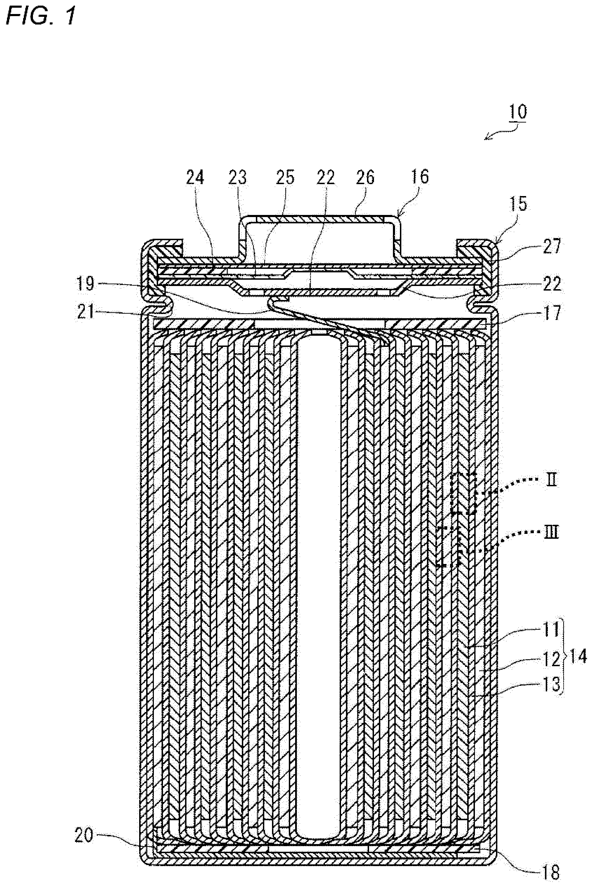

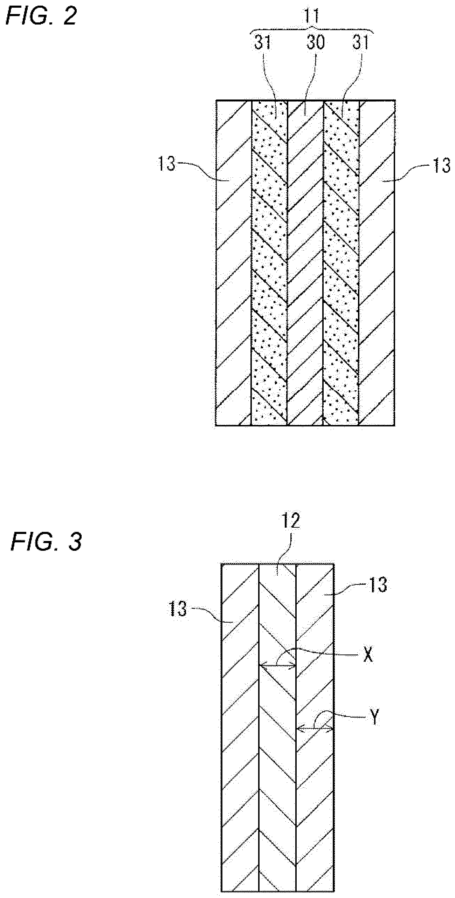

FIG. 1 is a schematic longitudinal cross-sectional view of an example of a lithium secondary battery according to an embodiment of the present disclosure. FIG. 2 is an enlarged view of a portion (a portion including a positive electrode) within a region II in FIG. 1. FIG. 3 is an enlarged view of a portion (a portion including a negative electrode) within a region III in FIG. 1. Note that each figure is a schematic illustration, and the ratio of the dimensions (e.g., thickness) and the like of the components may differ from the actual ones.

A lithium secondary battery 10 includes a cylindrical battery case, a wound electrode group 14 housed in the battery case, and a nonaqueous electrolyte (not shown). The electrode group 14 is constituted by winding a belt-like positive electrode 11 and a belt-like negative electrode 12, with a separator 13 interposed between the positive electrode 11 and the negative electrode 12.

The negative electrode 12 is constituted of a negative electrode current collector. The negative electrode 12 (negative electrode current collector) has a thickness of X and faces the separator 13 having a thickness Y Note that the thickness Y in FIG. 3 refers to the thickness of the separator 13 before the electrode group 14 is housed in a case body 15.

Although the negative electrode 12 is constituted only of the negative electrode current collector in the present embodiment, the negative electrode may be constituted by placing a lithium metal sheet in advance on the surface of the negative electrode current collector before the initial charging, or the negative electrode may be constituted by forming a negative electrode mixture layer on the surface of the negative electrode current collector.

The negative electrode 12 is electrically connected via a negative electrode lead 20 to the case body 15 that also serves as a negative electrode terminal. One end of the negative electrode lead 20 is connected to the negative electrode 12, for example, at its end in the longitudinal direction, and the other end is welded to the case body 15 on its inner bottom surface.

The positive electrode 11 includes a positive electrode current collector 30 and a positive electrode mixture layer 31, and is electrically connected via a positive electrode lead 19 to a cap 26 that also serves as a positive electrode terminal. One end of the positive electrode lead 19 is connected to the positive electrode 11, for example, near its center in the longitudinal direction. The positive electrode lead 19 extending from the positive electrode 11 passes through a through-hole (not shown) formed in an insulating plate 17 and extends to a filter 22. The other end of the positive electrode lead 19 is welded to the filter 22 on its surface facing the electrode group 14.

The battery case includes the case body 15 which is a bottomed cylindrical metal container, and a sealing body 16 that seals the opening of the case body 15. A gasket 27 is placed between the case body 15 and the sealing body 16, and this ensures the airtightness of the battery case. Within the case body 15, insulating plates 17 and 18 are placed at both ends of the electrode group 14 in the winding axis direction, respectively.

The case body 15 has, for example, a step portion 21 formed by pressing the side wall of the case body 15 partially from outside. The step portion 21 may be formed annularly on the side wall of the case body 15 along the circumferential direction of the case body 15. In this case, the sealing body 16 is supported on the step portion 21 on the side facing the opening.

The sealing body 16 includes the filter 22, a lower valve body 23, an insulating member 24, an upper valve body 25, and the cap 26. In the sealing body 16, these members are stacked in this order. The sealing body 16 is fitted at the opening of the case body 15, with the cap 26 positioned outside the case body 15 and the filter 22 positioned inside the case body 15. Each of the aforementioned members constituting the sealing body 16 has, for example, a disk shape or a ring shape. The lower valve body 23 and the upper valve body 25 are connected to each other at their respective central portions, and the insulating member 24 is interposed between their respective peripheral portions. The filter 22 and the lower valve body 23 are connected to each other at their respective peripheral portions. The upper valve body 25 and the cap 26 are connected to each other at their respective peripheral portions. That is, the members except the insulating member 24 are electrically connected to each other.

The lower valve body 23 is provided with a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 raptures, to let the gas escape though an aperture (not shown) formed in the cap 26.

Although the illustrated example is a cylindrical lithium secondary battery, the present embodiment can be applied without limited thereto. The shape of the lithium secondary battery may be selected according to its use and the like from a cylindrical shape and other various shapes, such as coin, prismatic, sheet, and flat shapes. Although the illustrated example includes a wound electrode group constituted by winding a positive electrode and a negative electrode, with a separator interposed therebetween, the electrode group also may be in any form, and may be a stacked electrode group constituted by stacking a positive electrode and a negative electrode, with a separator interposed therebetween. For other constitutions except the electrode group and the nonaqueous electrolyte of the lithium secondary battery, any known ones can be used without particular limitation.

### [Examples]

The lithium secondary battery according to the present disclosure will be specifically described below with reference to Examples and Comparative Examples. The present disclosure, however, is not limited to the following Examples.

### «Examples 1 to 6 and Comparative Examples 1 to 4»

### (1) Production of positive electrode

A lithium-containing transition metal oxide (NCA; positive electrode active material) containing Li, Ni, Co, and Al, acetylene black (AB; conductive material), and polyvinylidene fluoride (PVdF; binder) were mixed in a mass ratio of NCA:AB:PVdF = 95:2.5:2.5, to which N-methyl-2-pyrrolidone (NMP) was further added in an appropriate amount and stirred, to prepare a positive electrode mixture slurry. Next, the prepared positive electrode mixture slurry was applied onto both sides of an Al foil that functions as a positive electrode current collector, and then dried, followed by rolling of the applied film of the positive electrode mixture using a roller. Lastly, the resultant stack of the positive electrode current collector and the positive electrode mixture was cut in a predetermined electrode size, to obtain a positive electrode with a positive electrode mixture layer formed on each of both sides of the positive electrode current collector.

### (2) Production of negative electrode

A rectangular stainless steel foil (thickness X: 10 µm) having an austenite percentage, a breaking strength, and a breaking elongation whose values are shown in Table 1 was prepared as a negative electrode current collector. A lithium alloy foil (thickness 25 µm) was pressure-bonded to the stainless steel foil in an inert gas atmosphere. A negative electrode was thus produced.

In Table 1, the following stainless steel foils were used for E1 to E6, respectively.
E1: SUS304 modified 2 (Ni content: 5 mass%)
E2: SUS304 modified 1 (Ni content: 6.5 mass%)
E3: SUS304
E4: SUS316
E5: SUS316L
E6: SUS316L

In Table 1, the following stainless steel foils were used for C1 to C4, respectively.
C1: SUS304 modified 3 (Ni content: 3.5 mass%)
C2: SUS304 modified 4 (Ni content: 2 mass%)
C3: SUS444
C4: SUS444

In the stainless steels used in E2, E1, C1, and C2, in this order, the amount of Ni was decreased, and the amount of ferrite was increased (the austenite percentage was decreased), based on SUS304.

### (3) Preparation of nonaqueous electrolyte

In a nonaqueous solvent, LiPF₆ and LiBF₂(C₂O₄) were dissolved at 1 mol/L and 0.1 mol/L, respectively, to prepare a liquid nonaqueous electrolyte. In Table 1, for an ether-based nonaqueous electrolyte, 1,2-dimethoxyethane and 1,1,2,2-tetrafluoroethyl-2,2,2-trifluoroethyl ether were used as the nonaqueous solvent. For a carbonate-based nonaqueous electrolyte, dimethyl carbonate was used as the nonaqueous solvent.

### (4) Production of battery

To the positive electrode obtained above, a tab made of Al was attached. To the negative electrode obtained above, a tab made of Ni was attached. In an inert gas atmosphere, the positive electrode and the negative electrode were spirally wound, with a separator interposed between the positive electrode and the negative electrode, to fabricate a wound electrode group. The separator used here was a polyethylene thin film, and the thickness Y of the separator was set to the values shown in Table 1. The resultant electrode group was housed in a pouch-like package member formed of a laminate sheet including an Al layer, and the above nonaqueous electrolyte was injected into the package member housing the electrode group, and then, the package member was sealed, to complete a lithium secondary battery. In Table 1, E1 to E6 are batteries of Examples 1 to 6, and C1 to C4 are batteries of Comparative Examples 1 to 4.

### [Evaluation]

With respect to each of the obtained batteries, a charge-discharge cycle test was performed in a 25 °C environment. Charging and discharging were performed under the following conditions. The batteries were allowed to rest for 20 minutes between charging and discharging.

### (Charging)

A constant-current charging was performed at 10 mA until the voltage reached 4.1 V, and then, a constant-voltage charging was performed at 4.1 V until the current reached 1 mA.

### (Discharging)

### A constant-current discharging was performed at 10 mA until the voltage reached 3 V

Charging and discharging were repeated up to 100 cycles, and the discharge capacity at the 100th cycle was measured. The evaluation results are shown in Table 1. In Table 1, the discharge capacity of each battery at the 100th cycle is shown as a relative value, with the discharge capacity of E1 at the 100 cycle taken as 100.

**[Table 1]**

| battery | negative electrode current collector | | | nonaqueous electrolyte | separator thickness Y (µm) | negative electrode current collector thickness X (µm) | thickness ratio Y/X | discharge capacity at 100th cycle (index) |
|---|---|---|---|---|---|---|---|---|
| | austenite percentage (%) | breaking strength (MPa) | breaking elongation (%) | | | | | |
| E1 | 55 | 1500 | 1 | carbonate-based | 15 | 10 | 1.5 | 100 |
| E2 | 70 | 1200 | 1.5 | carbonate-based | 15 | 10 | 1.5 | 102 |
| E3 | 95 | 700 | 5 | carbonate-based | 15 | 10 | 1.5 | 112 |
| E4 | 100 | 650 | 12 | ether-based | 15 | 10 | 1.5 | 115 |
| E5 | 100 | 600 | 15 | ether-based | 35 | 10 | 3.5 | 118 |
| E6 | 100 | 600 | 15 | ether-based | 45 | 10 | 4.5 | 122 |
| C1 | 45 | 650 | 4 | carbonate-based | 15 | 10 | 1.5 | 88 |
| C2 | 30 | 1200 | 1.7 | carbonate-based | 15 | 10 | 1.5 | 75 |
| C3 | 5 | 600 | 10 | ether-based | 15 | 10 | 1.5 | 60 |
| C4 | 5 | 600 | 10 | carbonate-based | 35 | 10 | 3.5 | 65 |

In E1 to E6 in which the austenite percentage was 50% or more, as compared to in C1 to C4 in which the austenite percentage was less than 50%, the discharge capacity at the 100th cycle was high, and the cycle characteristics were improved. Each of the batteries after 100 cycles was disassembled, to perform SEM observation on the negative electrode current collector. The result confirmed that the rupture occurrence in the negative electrode current collector was suppressed in E1 to E6. On the other hand, in C1 to C4, a rupture occurred in the negative electrode current collector, and in all of C1 to C4, almost no elongation deformation was observed at the ruptured portion, confirming that it was a brittle fracture.

Comparison between E3 and E4 in which the austenite percentage was 50% or more showed that in E4 including an ether-based nonaqueous electrolyte, the cycle characteristics were further improved than in E3 including a carbonate-based nonaqueous electrolyte. On the other hand, comparison between C2 and C3 in which the austenite percentage was less than 50% showed that in C3 including an ether-based nonaqueous electrolyte, the cycle characteristics were lower than in C2 including a carbonate-based nonaqueous electrolyte.

The foregoing shows that, with respect to the negative electrode having an austenite percentage of 50% or more, when an ether-based nonaqueous electrolyte is used, the cycle characteristics improvement effect can be remarkably obtained.

Comparison among E4 to E6 in which the austenite percentage was 100% showed that in E5 and E6 in which the Y/X was 2.5 or more, the cycle characteristics were further improved than in E4 in which the Y/X was less than 2.5. On the other hand, comparison between C2 and C4 in which the austenite percentage was less than 50% showed that in C4 in which the Y/X was 2.5 or more, no improvement in cycle characteristics was observed relative to C2 in which the Y/X was less than 2.5.

The foregoing shows that, with respect to the negative electrode current collector in which the austenite percentage was 50% or more, when the Y/X was 2.5 or more, the cycle characteristics improvement effect can be remarkably obtained.

### [Industrial Applicability]

The lithium secondary battery of the present disclosure is applicable to electronic devices, such as cellular phones, smart phones, and tablet terminals, electric cars including hybrids and plug-in hybrids, home storage battery systems combined with a solar cell, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: lithium secondary battery
- 11: positive electrode
- 12: negative electrode
- 13: separator
- 14: electrode group
- 15: case body
- 16: sealing body
- 17, 18: insulating plate
- 19: positive electrode lead
- 20: negative electrode lead
- 21: step portion
- 22: filter
- 23: lower valve body
- 24: insulating member
- 25: upper valve body
- 26: cap
- 27: gasket
- 30: positive electrode current collector
- 31: positive electrode material layer

## Claims

1. A lithium secondary battery, comprising:
a positive electrode containing a positive electrode active material capable of absorbing and releasing lithium ions;
a negative electrode including a negative electrode current collector;
a separator disposed between the positive electrode and the negative electrode; and
a nonaqueous electrolyte having lithium ion conductivity, wherein
at the negative electrode, lithium metal deposits during charging, and the lithium metal dissolves during discharging, and
the negative electrode current collector includes an austenitic stainless steel.

2. The lithium secondary battery according to claim 1, wherein the negative electrode current collector has a breaking strength of 850 MPa or less and has a breaking elongation of 3% or more.

3. The lithium secondary battery according to claim 1 or 2, wherein
the nonaqueous electrolyte contains a nonaqueous solvent and a lithium salt dissolved in the nonaqueous solvent, and
the nonaqueous solvent contains at least one ether compound in a content of 80 mass% or more.

4. The lithium secondary battery according to any one of claims 1 to 3, wherein a ratio Y/X of a thickness Y of the separator to a thickness X of the negative electrode current collector is 2.5 or more.
